(19) Europäisches Patentamt
European Patent Office
Office européen des brevets

(11) Publication number : **0 465 251 A1**

# (12) EUROPEAN PATENT APPLICATION

(21) Application number : **91306082.8**

(51) Int. Cl.$^5$ : **C08L 79/08**, D01F 6/74

(22) Date of filing : **04.07.91**

(30) Priority : **05.07.90 US 548041**

(43) Date of publication of application :
**08.01.92 Bulletin 92/02**

(84) Designated Contracting States :
**AT BE CH DE DK ES FR GB GR IT LI LU NL SE**

(71) Applicant : **HOECHST CELANESE CORPORATION**
**Route 202-206 North**
**Somerville, New Jersey (US)**

(72) Inventor : **Chung, Tai-Shung**
**58 Beaver Dam Road**
**Randolph,Morris County New Jersey (US)**
Inventor : **Schlask, Arthur G.**
**124 E. Coffax Avenue**
**Roselle Park,Union County New Jersey (US)**
Inventor : **Glick, Morton**
**51 Parkview Terrace**
**Summit,Union County New Jersey (US)**

(74) Representative : **De Minvielle-Devaux, Ian Benedict Peter et al**
**CARPMAELS & RANSFORD 43, Bloomsbury Square**
**London WC1A 2RA (GB)**

## (54) Compositions of aromatic polybenzidmidazoles and polysulfones and fibers therefrom.

(57) A novel composition including from about 5 parts by weight to about 40 parts by weight of a polysulfone and from about 95 parts by weight to about 60 parts by weight of an aromatic polybenzimidazole, and a process for the production of high-strength PBI filaments. The process includes : preparing a PBI solution ; forming filaments by extruding the solution ; washing and drying the filaments ; and, drawing the filaments. Processes for preparing and for using a miscible polymer composition are also provided.

EP 0 465 251 A1

FIG. 1

Tensile modulus of PBI/Polysulfone Fibers with LiCl

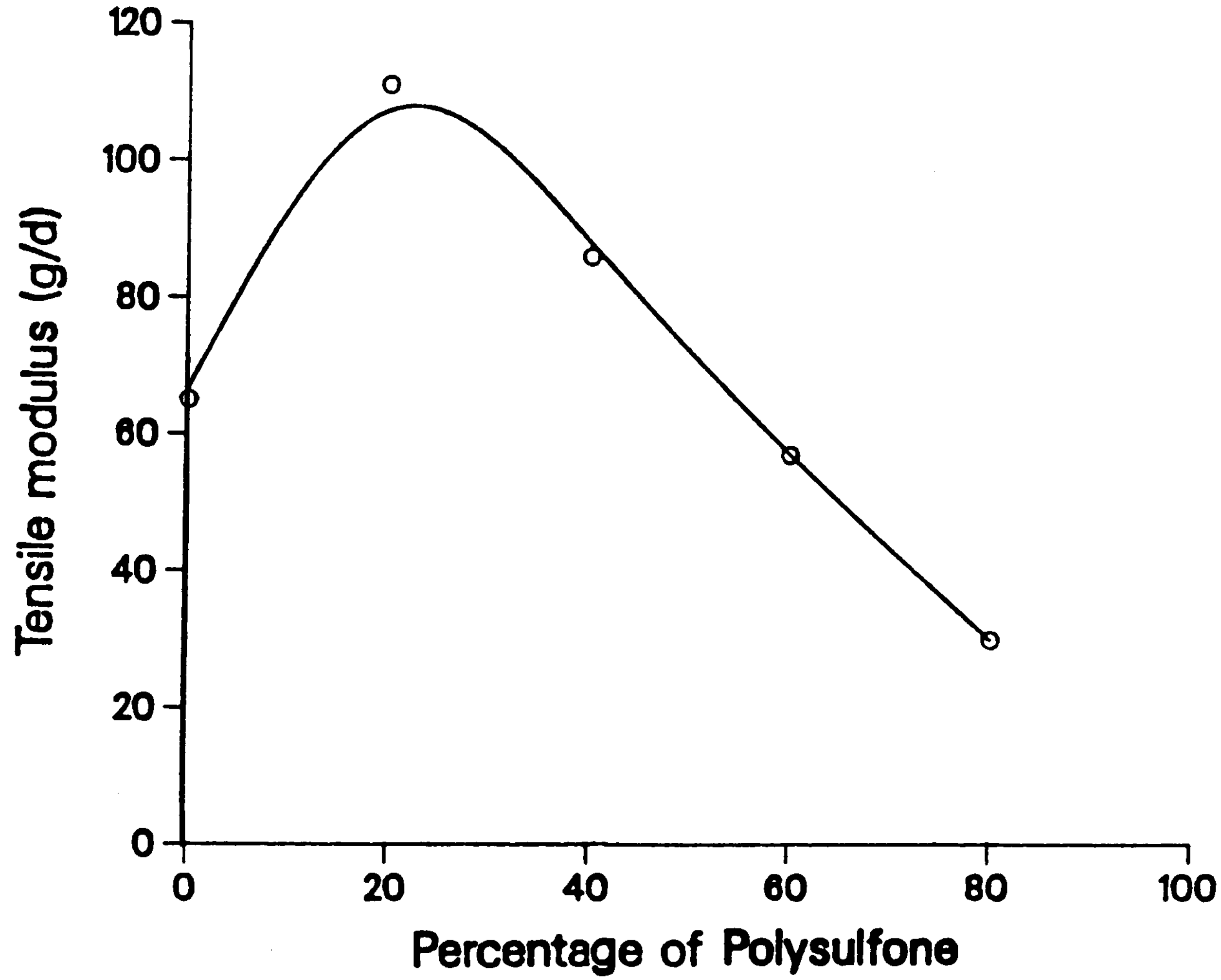

This invention is concerned with novel compositions comprising a polysulfone and an aromatic polybenzinidazole. The novel compositions are suitable for the formation of fibers, films, thermoplastic molding compositions, and the like.

## BACKGROUND OF THE INVENTION

The number of known classes of high performance polymers that are useful under severe environmental conditions is limited. In addition, some of the known classes of polymers are deficient in some properties, e.g., physical properties, solvent and thermal resistance, and processability. Some are also quite expensive.

Aromatic polybenzimidazoles are characterized by a high degree of thermal and chemical stability. They may be shaped to form fibers, films, and other articles of wide utility which show resistance to degradation by heat, hydrolytic media and oxidizing media. However, many of the polybenzimidazoles are not easily thermally processable at desirably low enough temperatures and pressures. Unfortunately, the aromatic polybenzimidazoles have relatively high moisture regain, which, although desirable for textile fibers, is undesirable for engineering plastics. In addition, they are rather expensive polymers.

Processes for the preparation of aromatic polybenzimidazoles are described in a number of United States Patents, e.g., 3,901,855; 4,002,679; 3,433,772; 3,441,640; 3,509,108; 3,526,693; 3,549,603; 3,552,389; 3,619,453; 3,671,491; 3,969,430; and 4,020,142. In addition, a review of the processes for the preparation of aromatic polybenzimidazoles is contained in J.P. Critchley, G.J. Knight and W.W Wright, Heat-Resistant Polymers-Technologically Useful Materials, Plenum Press, New York (1983), 259-322.

Polysulfone resins are among the most chemically and thermally durable thermoplastic synthetic polymers. Polysulfone sulfonates are also known and used; see, for example, U.S. Patent Nos. 3,709,841 and 4,273,903.

The term "polysulfone" as used herein generally connotes polymers which are essentially fully aromatic in that the polymer main chain, which is normally linear, comprises aromatic divalent radicals joined by linking groups of which at least a substantial number are the divalent $-SO_2-$ radical. In general, this class of polymers is characterized by a structure which includes recurring polymer units of the formula:

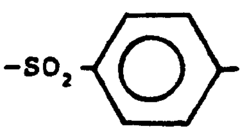

Sulfonated polysulfone polymers are well known, as is the method of their preparation; see, for example, U.S. Pat. No. 3,709,841, wherein Quentin describes a preparation of polymers in which part of the aromatic rings are substituted with hydroxysulfonyl radicals ($-SO_3H$, also called sulfonic groups). Other descriptions are found in U.S. Pat. No. 4,273,903 and British Pat. No. 1,350,342.

The aromatic diols which may be used to produce the aromatic polysulfones typically are diols in which the hydroxy group is attached to a carbon atom is an isolated or fused aromatic ring.

Representative example of suitable aromatic diols include hydroquinone, resorcinol, 1,4-naphthalenediol, catechol, 4,4′-isopropylidenediphenol (also known as bisphenol A) or its structural analogs, 4,4′-sulfonyldiphenol, 4,4′-thiodiphenol, 4,4′-oxydiophenol, 4,4′-dihydroxybiphenyl, 4,4′-sulfonyl-bis(2,6-dibromophenol), 4,4′-(2-norbornylidene)diphenol, 2,6-naphthalenediol, 4,4′-isopropylidene-bis(2,6-dichlorophenol).

The polysulfones are a series of engineering thermoplastics. One class of polysulfones is available from Amoco Corporation under the trade names of UDEL$^R$ and Radel$^R$ and from ICI Corporation under the trade name of Victrex PES$^R$. For relatively inexpensive polymers, they have reasonable physical properties (e.g., thermal resistance, impact strength, etc.) and good processability. They have generally good resistance to chemicals, with some exceptions, e.g. chorinated solvents, ethylene glycol, N,N-dimethylformamide, and inorganic acids. However, the utility of the polysulfones is severely limited in the aerospace industry, where resistance to paint strippers such as methylene cholride is required. The poor hydrolytic stability also limits its use in specific applications.

Commonly assigned U.S. Pat. No. 3,441,640 broadly discloses a wet spinning method for the production of polybenzimidazole filaments having a denier per filament of 0.1 to 50. However, extremely fine filaments are not easily produced on a reliable basis by wet spinning methods. The unavoidable currents formed in the liquid as the polymer is extruded into it can disrupt the filaments.

Dry spinning processes, in which the polymer solution is extruded vertically downward into a host stream of dry gas, have also been disclosed for the production of polybenzimidazole filaments. However, with super-fine filaments, the vertical distances commonly employed in such processes (e.g., 5 to 8 meters) may be a controlliing factor since the filaments may not have sufficient strength to maintain integrity all the way to the bottom.

A dry jet/wet spinning process was disclosed in commonly assigned U.S. Pat. No. 3,851,025. That patent relates to the production of hollow polybenzimidazole filaments which are useful for specialized reverse osmosis applications.

It is an object of the present invention to provide an improved process for the stable production of high-strength polybenzimidazole filaments.

It is another object of the present invention to provide a commercially practicable on-line, continuous process for the production of polybenzimidazole filaments whithout diminution of the desired tensile properties.

It is still another object of this invention to provide compositions of aromatic polybenzimidazoles and polysulfones, which are less expensive than aromatic polybenzimidazoles and which have higher thermal stability and better solvent resistance than polysulfones.

It is a further object of this invention to provide compositions of aromatic polybenzimidazoles and polysulfones which are useful in molding, fiber, or film - forming processes.

These and other objects will be apparent from the following description and appended claims.

## SUMMARY OF THE INVENTION

The invention provides a novel composition comprising from about 5 weight precent to about 40 weight percent of a polysulfone and from about 95 weight percent to about 60 weight percent of an aromatic polybenzimidazole. Preferably, the composition comprises at least about 10-30 weight percent of a polysulfone.

The composition of the invention may be prepared by a process which comprises dissolving an aromatic polybenzimidazole and a polysulfone in a mutal solvent (in relative weight proportions of from about 60 to about 95 of the aromatic polybenzimidazole to about 40 to about 5 of the polysulfone) and then either using the solution to form products films or fibers, or adding the solution to a non-solvent to precipitate the novel composition and subsequently drying the composition.

The compositions, particularly in the form of films, fibers or fibrets, may be post-treated with heat and/or sulfuric acid to minimize shrinkage during subsequent heating and to further stabilize them against solvents and acids.

A process for the production of stabl high-strength polybenzimidazole filaments comprises:

(a) providing a spinning solution comprising approximately 0.1 to 5 weight % LiCl and approximately 20 to 35 percent bu weight of a composition containing from about 60 to about 95 percent of polybenzimidazole and from about 40 to about 5 percent polysulfone in a solvent selected from the group consisting of dimethylacetamide, dimethylformamide, dimethylsulfoxide, concentrated sulfuric acid, and N-methylpyrrolidone,

(b) extruding the spinning solution vertically downward into a gaseous atmosphere through a plurality of extrusion orifices having a diameter of approximately 20 to 200 microns to form a plurality of filaments and simultaneously drawing the filaments, with an initial draw ratio of approximately 2:1 to 20:1,

(c) washing the filaments to substantially remove residual solvent,

(d) drying the filaments and,

(e) drawing the filaments at a temperature in the approximate range of 350-500°C and a heat draw ratio of approximately 1.5:1 to 10:1 to produce polybenzimidazole filaments having a denier per filament of approximately 0.5 to 25 and a tenacity of at least 3 grams per denier.

Preferably, the hot drawn fiber is then immersed in sulfuric acid, dried and then further stabilized at 350°C to 500°C with a draw ratio of 0.95:1 to 1:1.

## BRIEF DESCRIPTION OF THE FIGURES

Fig. 1 shows the variation of the tensile modulus of fibers of the present invention with changing polysulfone percentage.

Fig. 2 shows that the tenacities of fibers of the invention decrease with increasing polysulfone content.

Fig. 3 shows the effect of draw ratio and temperature on tensile modulus for fibers of the present invention.

Fig. 4 shows the effect of draw ratio and temperature on tensile strength for fibers of this invention.

## DESCRIPTION OF THE PREFERRED EMBODIMENTS

Although any aromatic polybenzimidazole described in the prior art may be used, the preferred aromatic polybenzimidazoles employed as starting materials to prepare the novel polymer blends of the present invention

are those having the repeating unit formula:

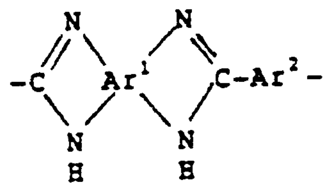

wherein

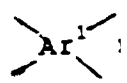

represents a tetravalent aromatic moiety having the formula:

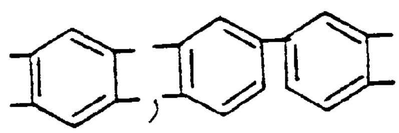

or

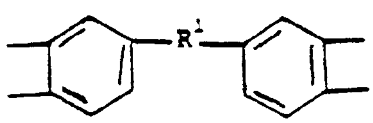

wherein $R^1$ is -O-, $-SO_2-$, -CH=CH-, $-C(CF_3)_2-$ or $(-CH_2-)_x$ and x is an integer of from 1 to 4; and $-Ar^2-$ represents a divalent aromatic moiety having the formula:

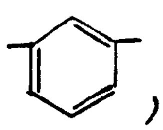
,
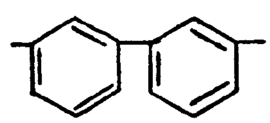

or

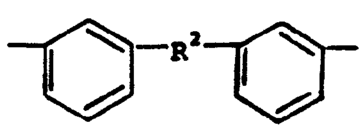

wherein $R^2$ is -O-, $-SO_2-$, -CH=CH-, $-C(CF_3)_2-$ or $(-CH_2-)_x$ and x is an integer of from 1 to 4.

Examples of the more preferred aromatic polybenzimidazoles which may be used in the polymer blends of the present invention include:

poly-2,2′-(m-phenylene)-5,5′-bibenzimidazole;
poly-2,2′-(pyridylene-3′,5′)-5,5′-bibenzimidazole;
poly2,2′-(furylene-2′,5′)-5,5′-bibenzimidazole;
poly-2,2′-(naphthalene-1′,6′)-5,5′-bibenzimidazole;

poly-2,2′-(biphenylene-4′,4′)-5,5′-bibenzimidazole;
poly-2,6′-(m-phenylene)-diimidazobenzene;
poly-2,2′-(m-phenylene)-5,5′-di(benzimidazole)ether;
poly-2,2′-(m-phenylene)-5,5′-di(benzimidazole)sulfide;
poly-2,2′-(m-phenylene)-5,5′-di(benzimidazole)sulfone;
poly-2,2′-(m-phenylene)-5,5′-di(benzimidazole)-methane;
poly-2,2′-(m-phenylene-5,5′-di(benzimidazole)-hexafluoroisopropane;
poly-2,2′-(m-phenylene)-5,5′-di(benzimidazole)-propane-2,2; and
poly-2,2′-(m-phenylene-5,5′-di(benzimidazole)-ethylene-1,2
where the double bonds of the ethylen groups are intact in the final polymer.

Poly-2,2′-(m-phenylene)-5,5′-bibenzimidazole, which contains recurring units of the formula:

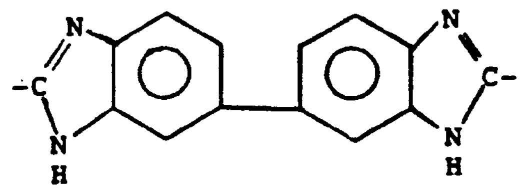

is most preferred. Aromatic polybenzimidazoles of this type are commercially available from HOESCHST CELANESE Corporation. These polybenzimidazoles are preferred components of the polymer blends because they are relatively more thermally stable and more soluble in N,N-dimethylacetamide than other polybenzimidazoles. This solubility makes them relatively processable.

Generally, the polysulfone used in the invention has the following unit formula:

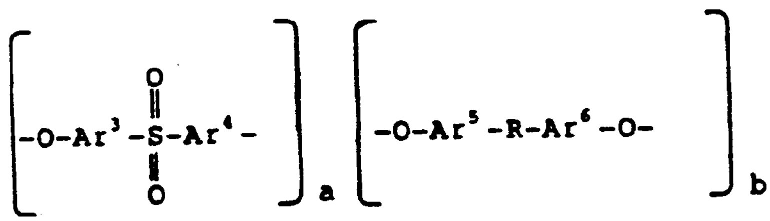

wherein $Ar^3$, $Ar^4$, $Ar^5$ and $Ar^6$ represents divalent aromatic moieties having from 6 to about 18 carbon atoms, or aromatic moieties having the following formula:

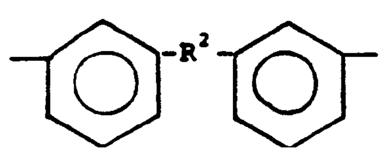

wherein $R^2$ represents $-C(Ch_3)_2-$ or $SO_2-$, S, or -O-, or mixtures thereof; R represents a divalent aliphatic moiety containing up to 6 carbon atoms, or mixtures thereof; and a has a value of greater than 0.5 to 1, has a value of 0 or a value less than 0.5, and the sum of a and b is equal to 1.

In the preferred polysulfones, the number of sulfone linking groups relative to all others is rarely more than 1 out of 3, and never as much as 1 out of 2.

The polysulfones from Amoco Corporation (UDEL$^R$, Radel$^R$, e.g., P1700 and P3500), and ICC's Victrex PES$^R$ are most preferred. These polysulfones are amorphous polymers. A combination of polysulfones may be blended in the compositions of the invention.

The polysulfones are soluble in halogenated or polar solvents. For example, the UDEL$^R$, Radel$^R$ and Victrex PES$^R$ polysulfones dissolve readily in methylene chloride, chloroform, N-methylpyrrilidinone, N,N-dimethylformamide and N,N-dimethylacetamide. However, it is necessary to heat concentrated polysulfone ($\geqq$ 10%) (e.g., at 100°C for 1/2 hour) in N-methylpyrrolidone in order to speed up the dope (solution) preparation process and obtain a clear solution.

The novel compositions comprise from about 60 weight percent to about 95 weight percent of a polybenzimidazole and from about 40 weight percent to about 5 weight percent of an aromatic polysulfone. The preferred compositions are those which are comprised of about 10 to about 30% polysulfone.

Although a composition of the present invention is mostly comprised of aromatic polybenzimidazole, it is preferred that the minor amount of polysulfone in the composition be sufficient to make the aromatic polybenzimidazole more tractable and processable and also less susceptible to moisture.

Most preferably, the composition comprises at least about 10 weight percent of a polysulfone. It is surprising that a minor amount of the polysulfone can ameliorate the weak properties of the polybenzimidazole, i.e., poor thermal plasticity and moisture regain. At the same time the less expensive polysulfone decreases the cost of the composition.

The compositions of the invention may be used as molding compositions. These molding compositions may include in the polymer matrix approximately 1 to 40 weight percent, preferably approximately 10 to 30 weight percent, of a solid filler and/or reinforcing agent. Representative fibers which may serve as reinforcing media include glass fibers, asbestors, graphitic carbon fibers, amorphous carbon fibers, synthetic polymeric fibers, aluminum fibers, aluminum silic fibers, aluminum oxide fibers, titanium fibers, magnesium fibers, rock woll fibers, steel fibers, etc. Representative filler materials include calcium silicate, silica, clays, talc, mica, polytetrafluoroethylene, graphite, alumina trihydrate, sodium aluminum carbonate, barium ferrite, etc.

Preferably, the starting polymers for the process of our invenion are dried to a level of 2% or less to minimize problems.

Drying may be accomplished in any convenient and effective manner, such as by drying the starting polymer overnight in vacuum at elevated temperature, e.g., from about 100°C to about 160°C.

In order to prepare stable compositions, the aromatic polybenzimidazoles and polysulfones first may be dissolved in a mutual solvent, e.g., N,N-dimethylformamide (DMF), N,N-dimethylacetamide (DMAc), dimethylsulfoxide (DMSO), or N-methylpyrrolidone (NMP) or concentrated $H_2SO_4$, so that each polymer is present in the resulting solution in the desired relative proportions, their total concentration being, e.g., from about 1% to about 30% on a weight/volume basis, preferably from about 10 to 30%. It is preferred that the total concentration of the two polymers in the solution be such that the viscosity of the solution is acceptable for subsequent processing. The two polymers may be simultaneously dissolved in the solvent, or each polymer may be separately dissolved in separate volumes of solvent and desired portions of the resulting solutions can be mixed together to form a solution of the two polymers.

If films or fibers of the solution are cast or extruded, the solvent should be evaporated at low relative humidity, e.g., in a dry nitrogen atmosphere, and moderate temperatures, e.g., at about ≧ 140°C. After a substantial portion of the solvent is removed (e.g., about 85%), the remaining solvent may be removed by washing the film or fibers with hot water. Whether the solution of the composition is cast, extruded or precipitated, moisture should be initially excluded until most of the solvent is removed.

The composition may be post-treated with heat and/or sulfuric acid to minimize shrinkage and stabilize the film or fiber. Preferably, the composition is post-treated by dipping in 2% sulfuric acid followed by heat-setting at about 350-420°C.

The novel compositions of this invention have unexpected properties and benefits. The compositions are useful under severe environmental conditions. The compositions have good thermal resistance, solvent resistance, improved physical properties and good price/performance characteristics. Although aromatic polybenzimidazoles generally have high thermal stability and good solvent resistance, they are expensive polymers with high moisture regain. Polysulfones generally have relatively low glass transition temperatures and lack resistance to certain solvents, but they are tractable polymers and are much less expensive than aromatic polybenzimidazoles.

Most of the known blends have physical properties following the rule of mixtures or below the rule of mixtures.

Fig. 1 shows that the tensile modulus of PBI/PS films exceeds the modulus predicted by the rule of mixtures. Fig. 2 shows that the tenacity of several PBI/PS films exceeds the rule of mixtures values. These data indicate the surprising synergistic effect obtained by blending PBI and PS.

Another process for preparing moldable compositions comprises grinding together an aromatic polybenzimidazole and a polysulfone in relative weight proportions to each other of from about 60 to about 95 of the aromatic polybenzimidazole to about 40 to about 5 of the polysulfone until the diameters of the solid particulates reach about 100 μm or less. For example, a solid PBI/PS (70/30) blend may be prepared by mechanically grinding a mixture of PBI and PS polymers. A freeze mill device may be used for grinding, and the grinding process continued until the diameters of the solid particulates reach about 37 μm or less. Those fine solid blends have a uniform visual appearance and are compressably moldable (e.g., at ≧5000 psi for 30 minutes at 410°C). The molded product has a dark color, is rigid and exhibits good physical integrity.

A PBI/PS spinning solution may be prepared by using an appropriate solvent. Typical solvents include dimethylacetamide, dimethylformamide, dimethylsulfoxide, and concentrated sulfuric acid. The polybenzimidazole and polysulfone polymers are each provided in the spinning solution at a concentration of about 20 to

35 percent by weight based upon the weight of the total solution, and preferably in a concentration of 22 to 35 percent by weight based upon the weight of the total solution. The spinning solution also contains lithium chloride in a concentration of about 0.1 to 5 percent by weight, preferably in a concentration of about 1 to 4 percent by weight. The lithium chloride serves the function of preventing the polybenzimidazole polymer from pashing out of the solution upon standing for extended periods of time.

A preferred spinning solution comprises about 22 to 26 percent by weight of the polymers, about 1 to 4 percent lithium chloride, and about 70 to 77 percent by weight dimethylacetamide. The spinning solution preferably exhibits a viscosity of about 40 to 4000 poise measured at 30°C, and most preferably a viscosity of about 1200 to 2500 poise measured at 30°C.

One suitable means for dissolving the polymer in the solvent is by mixing the materials at a temperature above the normal boiling point of the solvent for example, about 25°C to 120°C above such boiling point, and at a pressure of 2 to 15 atmospheres for a period of 1 to 5 hours. The resulting solutions then preferably are filtered to remove any undissolved polymer.

The blend dope is preferably provided at a temperature of approximately 130°C to 150°C at the time of extrusion. The solution is extruded through a plurality of extrusion orifices (e.g., anywhere from five or ten to several hundred). These extrusion orifices are generally in the form of a spinneret having 50 or 100 holes. The orifices of the present invention have a diameter of approximately 20 to 200 microns, preferably of approximately 30 to 50 microns. The spinning solution is placed in a pressure vessel, or bomb, and heated to approximately 120°C. To spin, the solution is fed under about 15 p.s.i. nitrogen pressure to a metering pump driven by a variable speed D.C. motor. The pump speed, and hence the solution flow rate, is maintained constant by an electronic controller. In order to remove the last traces of particulate matter, the solution is passed through a heated candle filter and finally, just before entering the spinneret, through a stainless steel sintered disc filter. The face of the spinneret is heated to approximately 130°C to 150°C during extrusion. The polymer solution is extruded vertically downward into a gaseous atmosphere by either conventional wet spinning or dry spinning technology.

The following non-limiting examples illustrate the invention. In these examples the preferred aromatic polybenzimidazole polymer is used, namely, poly-2,2′-(m-phenylene)-5,5′-bibenzimidazole.

## EXAMPLE 1

### Dope Preparation

A polybenzimidazole dope (25.6% solids in dimethylacetamide) was blended with a polysulfone dope (25.6% solids in dimethylacetamide) prepared with various weight ratios at 80-100°C. The two mixed well, and the resulting dope was clear and transparent at that temperature. After cooling, the dope was stable and quiet clear. However, we observed that the 20/80 and 40/60 PBI/PS dopes phase-separated after remaining undistributed for a few days. Separation of a 60/40 PBI/PS sample occured after a few weeks. There was no phase separation for an 80/20 blend, even after a few months. This probably indicates that the PBI is stably miscible with the PS in solution if the PBI content is in the range of from 70 to 100%.

## EXAMPLE 2

### Spinning Process

Both wet- and dry-spinning processes were used to prepare initial fiber samples from a dimethylacetamide solution having 23% PBI/PS polymer and 2% LiCl. The ratio of PBI/PS was 80/20. The as-spun fibers were weak. Their properties are shown in Table 1.

**Table 1**

| Sample | Denier (dpf) | Density | Initial Modulus (g/d) | /Tenacity/ (g/d) | %Elong. |
|---|---|---|---|---|---|
| Wet-spun | 30 | 1.283 | 30.2 | / 0.97 | / 3.94 |
| Dry-spun | 4.46 | | 43.5 | / 1.417 | / 82.46 |

Clearly, the dry-spun fibers have better properties than those of the wet-spun fibers, especially elongation at

break.

Hot Draw Process

These fibers were further drawn at elevated temperature at various draw ratios. Drawn fibers were much stronger than as spun fibers. Table 2 lists their properties.

**Table 2**

| Sample | Denier (dpf) | Draw ratio | Initial Modulus/Tenacity/%Elong. | | |
|---|---|---|---|---|---|
| PBI Control | 7.43 | 2.0 | 66.0 | / 3.61 | / 47.74 |
| PBI/PS (80/20) (wet-spun) | 7.96 | 3.5 @ 400°C | 110.9 | / 2.8 | / 3.08 |
| PBI/PS (80/20) (dry-spun) | 1.98 | 4.0 @ 420°C | 112.1 | / 3.6 | / 7.3 |

Dry-spun 80/20 PBI/PS fibers have almost the same tensile modulus as that of 80/20 wet-spun fibers. However, dry-spinning results in a slightly better tensile strength and an elongation at break than the wet-spinning.

The tensile modulus of high denier 80/20 PBI/PS fibers is almost the same as that of low denier 80/20 PBI/PS fibers, and they both surpass that of PBI. IR spectra indicated a shift of the 1244 ether band of 4 $cm^{-1}$ to lower frequency in the PBI/PS blends, which wouild suggest an interaction between the NH and the O.

Figure 3 shows the effect of draw temperature and draw ratio on the tensile modulus of 80/20 dry-spun fibers, while Figure 4 illustrates the effect of draw temperature and draw ratio on the tensile strength of 80/20 dry-spun fiber.

EXAMPLE 3

Acid Treatment and Stabilization

Using fibers prepared as in Example 2, it was found that acid-treated and stabilized 80/20 PBI/PS fibers have a better modulus than stabilized PBI fibers as illustrated in Table 3:

**Table 3**

| Properties | Stabilized PBI/PS | Stabilized PBI |
|---|---|---|
| Denier per filament | 1.337 | 1.5 |
| Modulus (g/d) | 71.5 | 45 |
| Tenacity (g/d) | 2.24 | 2.7 |
| Break elongation (%) | 5.9 | 30 |

EXAMPLE 4

The Limiting Oxygen Indices(LOI) of the PBI/PS fibers of Example 2 were compared to those of PBI fibers. As table 4 shows, the LOI's were similar, suggesting that the PBI/PS fibers are as flame retardant as PBI fibers. This test used a non-standard method in which plied yarn lengths were wound with yarn so that the specimen would stand upright in the test apparatus.

Table 4 also shows the flame shrinkage behavior of these fibers.

**Table 4**

| | LOI of tied Yarn Bundles | Flame Shrinkage (%) |
|---|---|---|
| Drawn Sulfonated PBI | 35 | 10.0 |
| Drawn Sulfonated PBI/PS(80/20) | 37 | 10.2 |

Example 5

PBI and 80/20 PBI/PS fibers were exposed to steam at 140°C for four hours. As indicated in Table 5, it was surprisingly found that steam treatment had a chemical effect on the PBI/PS fibers. The sulfonated fibers were strengthened by steam treatment, whereas the unsulfonated fibers were weakened under the same conditions.

**Table 5**
**Relative Change (%)**

| | No. of Tests | Tensile Strength | Elongation | Denier |
|---|---|---|---|---|
| Drawn Sulfonated PBI | 20 | -4.4 | +13.6 | +7.5 |
| Drawn Sulfonated PBI/PS | 20 | +23 | +58 | +36 |
| Drawn Unsulfonated PBI/PS | 20 | -20 | -20 | -12 |

Those skilled in the art will recognize the many variations that may be made without departing from the spirit of this invention. The invention is not limited to the embodiments described and illustrated above, but includes all the subject matter within the scope of the appended claims.

## Claims

1. A composition comprising from 5 weight percent to 40 weight percent of a polysulfone and from 95 weight percent to 60 weight percent of an aromatic polybenzimidazole.

2. A composition as claimed in claim 1 in which the aromatic polybenzimidazole contains units of the formula:

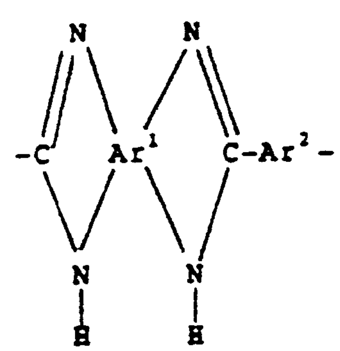

wherein

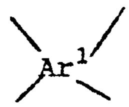

represents a tetravalent aromatic moiety having the formula:

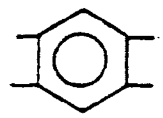, 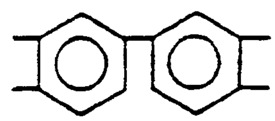

or

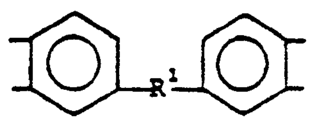

wherein $R^1$ is -O- $-SO_2-$, -CH=CH-, $-C(CF_3)_2-$ or $(-CH_2-)_x$ and $_x$ is an integer of from 1 to 4; and $-Ar^2-$ represents a divalent aromatic moiety having the formula:

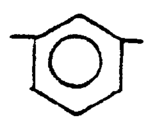, 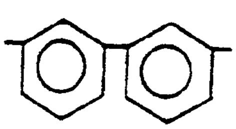

or

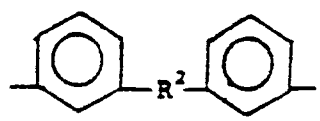

wherein $R^2$ is -O-, $-SO_2-$, -CH=CH-, $-C(CF_3)_2-$ or $(-CH_2-)_x$ and $_x$ is an integer of from 1 to 4.

**3.** A composition as claimed in claim 2 in which the aromatic polybenzimidazole is poly-2,2′-(m-phenylene)5,5′-bibenzimidazole.

**4.** A composition as claimed in any of claims 1-3 in which the polysulfone has the following unit formula:

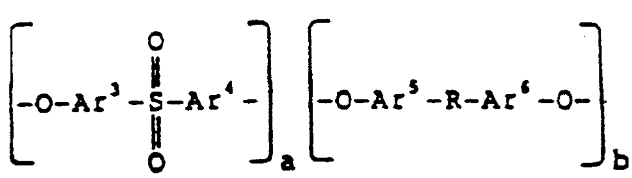

wherein $Ar^3$ $Ar^4$, $Ar^5$ and $Ar^6$ represents divalent aromatic moieties having from 6 to 18 carbon atoms, or aromatic moieties having the following formula:

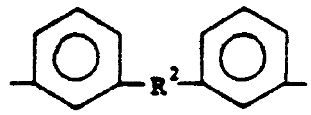

where in $R^2$ represents $-C(CH_3)_2-$ or $-SO_2-$, S, or -O-, or mixtures thereof; R represents a divalent aliphatic moiety containing up to 6 carbon atoms, or mixtures thereof; and has a value of greater than 0.5 up to 1, b has a value of 0 or a value less than 0.5, and the sum of a and b is equal to 1.

**5.** A composition as claimed in any of claims 1-4 which comprises at least about 10 weight percent of the polysulfone.

**6.** A composition as claimed in any of claims 1-5 which is phase separated.

**7.** A film, fiber or fibret prepared from miscible compositions in solution which comprise an aromatic polybenzimidazole and a polysulfone in relative weight proportions to each other of from 60 to 95 of the aromatic polybenzimidazole to 40 to 5 of the polysulfone.

**8.** A film, fiber or fibret as claimed in claim 7, having the features defined in any of claims 2-5.

**9.** A film, fiber or fibret as claimed in claim 7 or 8, which has been treated to minimize its shrinkage when subsequently subjected to heat and to increase its resistance to solvents and acids, such treatment being effected by means of heat or a sulfonating agent.

**10.** A film, fiber or fibret as claimed in claim 9, wherein said treatment comprised heating at a temperature of from 200° to 500°C.

**11.** A film, fiber or fibret as claimed in claim 10, wherein said temperature was from 350° to 400°C.

**12.** A film, fiber or fibret as claimed in claim 9, wherein said treatment was by means of a sulfonating agent followed by heat setting at temperature of from 200° to 500°C.

**13.** A film, fiber or fibret as claimed in claim 12, wherein said sulfonating agent was sulfuric acid, sulfur trioxide, toluene sulfonic acid or naphthalene sulfonic acid.

**14.** A film, fiber or fibret as claimed in claim 12, wherein said sulfonating agent was 2% sulforic acid and said heat setting was at a temperature of 350° to 420°.

**15.** A film, fiber or fibret as claimed in claim 14, wherein said heat setting was at a temperature of approximately 380°C.

**16.** A process for preparing a miscible polymer composition which comprises the steps of:
dissolving an aromatic polybenzimidazole and a polysulfone in a mutual solvent in relative weight proportions to each other of from 60 to 95 of the aromatic polybenzimidazole to 40 to 5 of the polysulfone;
adding said solution to a non-solvent to precipitate said composition; and
subsequently drying said composition.

**17.** A process as claimed in claim 16, in which the mutual solvent is N,N-dimethylformamide, N,N-dimethylacetamide or N-methylpyrrolidinone.

**18.** A process as claimed in claim 16 or 17, in which the non-solvent is an alcohol containing from 1 to 4 carbon atoms, or water.

**19.** A process as claimed in any of claims 16-18, in which there is employed the feature of any claims 2-5.

**20.** A process for preparing moldable compositions which comprises grinding together an aromatic polybenzimidazole and a polysulfone in relative weight proportions to each other of from 60 to 95 of the aromatic polybenzimidazole to 40 to 5 of the polysulfone until the diameters of the solid particulates reach 100 μm

or less.

**21.** A process for preparing films, fibers or fibrets from miscible compositions of polymers which comprises:
dissolving an aromatic polybenzimidazole and a polysulfone in a mutual solvent in relative weight proportions to each other of from 60 to 95 of the aromatic polybenzimidazole to 40 to 5 of the polysulfone; fabricating a film, fiber or fibret article from said solution under substantially moisture-free conditions; evaporating said solvent from said article; washing said article with a non-solvent; and drying said article at a temperature below 200°C.

**22.** A process as claimed in claim 21, in which the mutual solvent is N,N-dimethylformamide, N,N-dimethylacetamide, N-methylpyrrolidinone, or dimethylsulfoxide.

**23.** A process as claimed in any of claims 20-22 in which there is employed the feature of any of claims 2-5 and 9-14.

**24.** A process for the stable production of high strength polybenzimidazole filaments of comprising the steps of:

(a) providing a spinning solution comprising from 0.1 to 5 percent LiCl and from 20 to 35 percent by weight of a composition containing from 60 to 95 percent of polybenzimidazole and from 40 to 5 percent polysulfone in a solvent mixture selected from dimethylacetamide, dimethyformamide, dimethysulfoxide, concentrated sulfuric acid, and N-methylpyrrolidinone, said mixture comprising a PBI/PS ratio in the range of from 60/40 to 95/5;
(b) extruding said spinning solution vertically downward into a gaseous atmosphere through a plurality of extrusion orifices having a diameter of 20 to 200 microns to form a plurality of filaments with the concomitant drawing of said filaments, with an initial draw ratio of from 2:1 to 20:1;
(c) washing said filaments to substantially remove residual solvent;
(d) drying said filaments; and
(e) drawing said filaments at 400-500°C at a heat draw ratio of 1.5:1 to 10:1 to produce polybenzimidazole filaments having a denier per filament of 0.05 to 0.5 and a tenacity of at least 4 grams per denier.

**25.** A process according to claim 24, wherein in step (b) said solution is extruded at a temperature of 130° to 150°C.

**26.** A process according to claim 24 or 25, wherein said extrusion orifices have a diameter of 30 to 50 microns.

**27.** A process according to any of claims 24-26, wherein said initial draw ratio is 2:1 to 10:1.

**28.** A process according to any of claims 24-27, wherein said heat draw ratio is 3:1 to 6:1.

**29.** A process according to any of claims 24-27, wherein in step (a) there is provided a spinning solution comprising 22 to 26 percent by weight of a polybenzimidazole/polysulfone mixture containing 10-30% polysulfone, 1 to 4 percent by weight of lithium chloride, and 70 to 77 percent by weight of dimethylacetamide; in step (b) the initial draw ratio is from 2:1 to 10:1; and there is provided a step (f) comprising further stabilizing said filaments by immersion in sulfuric acid, drying, and treating at 350-500°C and a draw ratio of from 0.95:1 to 1:1.

**Claims for the following Contracting State: SP**

**1.** A process for preparing a miscible polymer composition which comprises the steps of:
dissolving an aromatic polybenzimidazole and a polysulfone in a mutual solvent in relative weight proportions to each other of from 60 to 95 of the aromatic polybenzimidazole to 40 to 5 of the polysulfone;
adding said solution to a non-solvent to precipitate said composition; and
subsequently drying said composition.

**2.** A process as claimed in claim 1 in which the aromatic polybenzimidazole contains units of the formula:

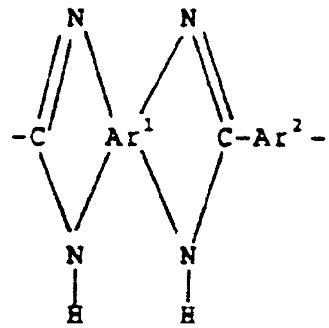

wherein

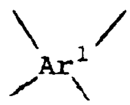

represents a tetravalent aromatic moiety having the formula:

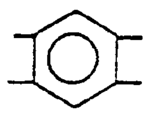
,
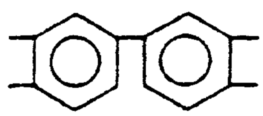

or

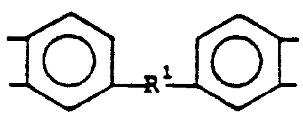

wherein $R^1$ is -O-, $-SO_2-$, -CH=CH-, $-C(CF_3)_2-$ or $(-CH_2-)_x$ and $_x$ is an integer of from 1 to 4; and $-Ar^2-$ represents a divalent aromatic moiety having the formula:

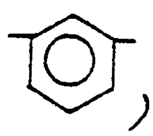
,
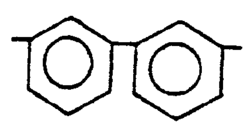

or

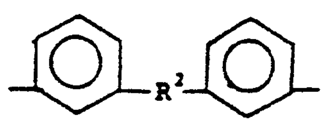

wherein $R^2$ is -O-, $-SO_2-$, -CH=CH-, $-C(CF_3)_2-$ or $(-CH_2-)_x$ and $_x$ is an integer of from 1 to 4.

3. A process as claimed in claim 2 in which the aromatic polybenzimidazole is poly-2,2′-(m-phenylen)5,5′-bibenzimidazole.

4. A process as claimed in any of claims 1-3 in which the polysulfone has the following unit formula:

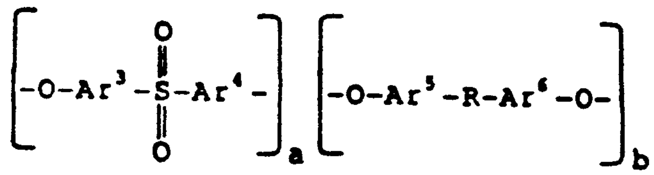

wherein $Ar^3$, $Ar^4$, $Ar^5$ and $Ar^5$ represents divalent aromatic moieties having from 6 to 18 carbon atoms, or aromatic moeities having the following formula:

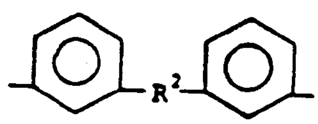

wherein $R^2$ represents $-C(CH_3)_2-$ or $-SO_2-$, S, or -O-, or mixtures thereof; R represents a divalent aliphatic moiety containing up to 6 carbon atoms, or mixtures thereof; and has a value of greater than 0.5 up to 1, b has a value of 0 or a value less than 0.5, and the sum of a and b is equal to 1.

5. A process as claimed in any of claims 1-4 wherein the amount of the polysulfone is at least 10 weight percent.

6. A process as claimed in any of claims 1-5, in which the mutual solvent is N,N-dimethylformamide, N,N-dimethylacetamide or N-methylpyrrolidinone.

7. A process as claimed in any of claims 1-6, in which the non-solvent is an alcohol containing from 1 to 4 carbon atoms, or water.

8. A process for preparing moldable compositions which comprises grinding together an aromatic polybenzimidazole and a polysulfone in relative weight proportions to each other of from 60 to 95 of the aromatic polybenzimidazole to 40 to 5 of the polysulfone until the diameters of the solid particulates reach 100 µm or less.

9. A process for preparing films, fibers or fibrets from miscible compositions of polymers which comprises:
dissolving an aromatic polybenzimidazole and a polysulfone in a mutual solvent in relative weight proportions to each other of from 60 to 95 of the aromatic polybenimidazole to 40 to 5 of the polysulfone; fabricating a film, fiber or fibret article from said solution under substantially moisture-free conditions; evaporating said solvent from said article; washing said article with a non-solvent; and drying said article at a temperature below 200°C.

10. A process as claimed in claim 9, in which the mutual solvent is N,N-dimethylformamide, N,N-dimethylacetamide, N-methylpyrrolidinone, or dimethylsulfoxide.

11. A process as claimed in claim 9 or 10, in which there is present at least 10 weight percent of the polysulfone.

12. A process as claimed in any of claims 9-11, in which the polybenzimidazole and/or the polysulfone is or as defined in any of claims 2-4.

13. A process as claimed in any of claims 9-12, further comprising post-treatment of said article to minimize its shrinkage when subsequently subjected to heat and to increase its resistance to solvents and acid, such post-treatment being effected by means of heat or a sulfonating agent.

14. A process as claimed in claim 13, wherein said post-treatment comprises heating at a temperature of from 200° to 500°C.

**15.** A process as claimed in claim 14, wherein said post-treatment comprises heating at a temperature of from 350° to 400°C.

**16.** A process as claimed in claim 13, wherein said post-treatment comprises treating with a sulfonating agent followed by heat setting at a temperature of from 200° to 500°C.

**17.** A process as claimed in claim 16, wherein said sulfonating agent is sulfuric acid, sulfur trioxide, toluene sulfonic acid or naphthalene sulfonic acid.

**18.** A process as claimed in claim 16, wherein said post-treatment comprises dipping in 2% sulfuric acid followed by heat setting at a temperature of from 350° to 420°C.

**19.** A process for the stable production of high strength polybenzimidazole filaments of comprising the steps of:

(a) providing a spinning solution comprising 0.1 to 5 percent LiCl and 20 to 35 percent by weight of a composition containing from 60 to 95 percent of polybenzimidazole and from 40 to 5 percent polysulfone in a solvent mixture selected from dimethylacetamide, dimethyformamide, dimethysulfoxide, concentrated sulfuric acid, and N-methylpyrrolidinone, said mixture comprising a PBI/PS ratio in the range of from 60/40 to 95/5;
(b) extruding said spinning solution vertically downward into a gaseous atmosphere through a plurality of extrusion orifices having a diameter of 20 to 200 microns to form a plurality of filaments with the concomitant drawing of said filaments, with an initial draw ratio of from 2:1 to 20:1;
(c) washing said filaments to substantially remove residual solvent;
(d) drying said filaments; and
(e) drawing said filaments at 400-500°C at a heat draw ratio of 1.5:1 to 10:1 to produce polybenzimidazole filaments having a denier per filament of 0.05 to 0.5 and a tenacity of at least 4 grams per denier.

**20.** A process according to claim 19, wherein in step (b) said solution is extruded at a temperature of 130° to approximately 150°C.

**21.** A process according to claim 19 or 20, wherein said extrusion orifices have a diameter of 30 to 50 microns.

**22.** A process according to any of claims 19-21, wherein said initial draw ratio is 2:1 to 10:1.

**23.** A process according to any of claims 19-22, wherein said heat draw ratio is 3:1 to 6:1.

**24.** A process according to any of claims 19-23, wherein in step (a) there is provided a spinning solution comprising 22 to 26 percent by weight of a polybenzimidazole/polysulfone mixture containing 10-30% polysulfone, 1 to 4 percent by weight of lithium chloride, and 70 to 77 percent by weight of dimethylacetamide; in step (b) the initial draw ratio is from 2:1 to 10:1 and there is provided a step (f) comprising further stabilizing said filaments by immersion in sulfuric acid, drying, and treating at 350-500°C and a draw ratio of from 0.95:1 to 1:1.

FIG. I

Tensile modulus of PBI/Polysulfone Fibers
with LiCl

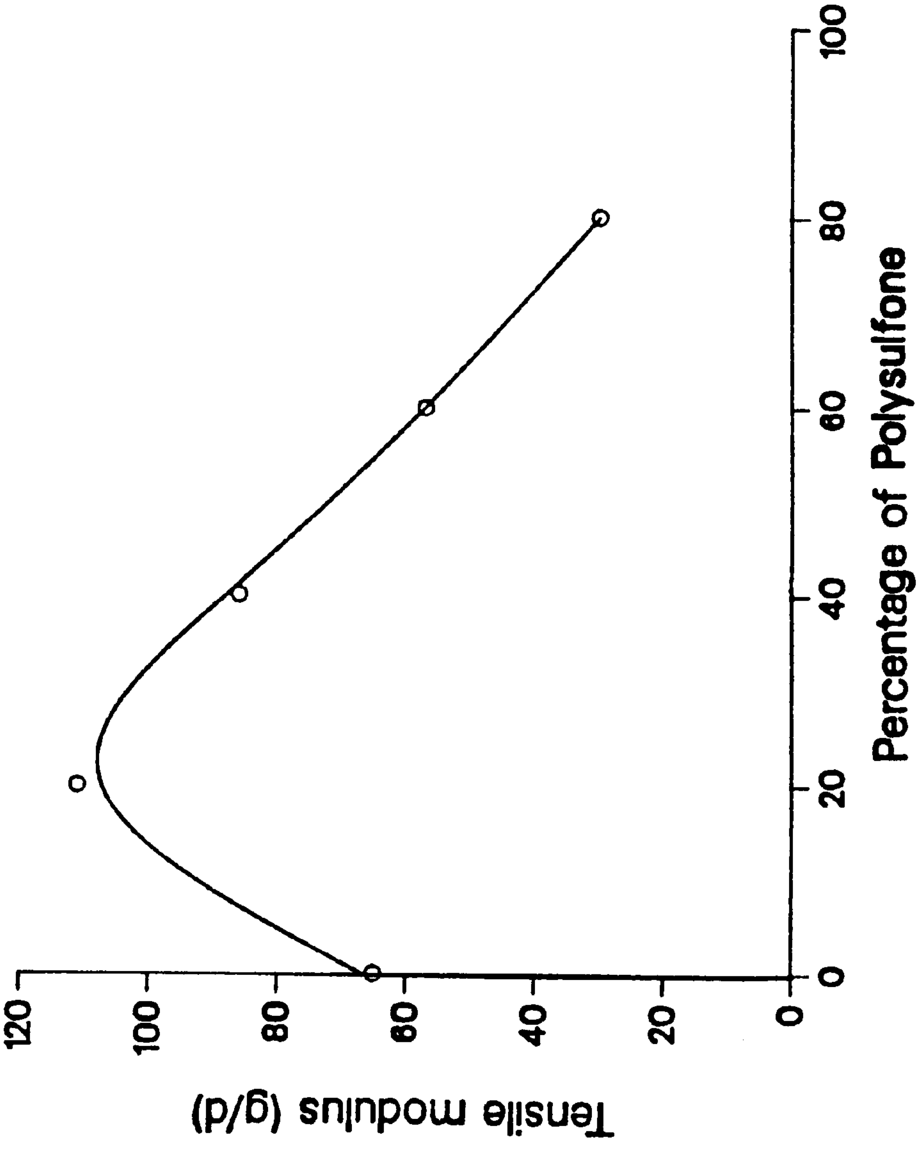

FIG. 2

**Tenacity of Hot Drawn PBI/Polysulfone Fibers with LiCl**

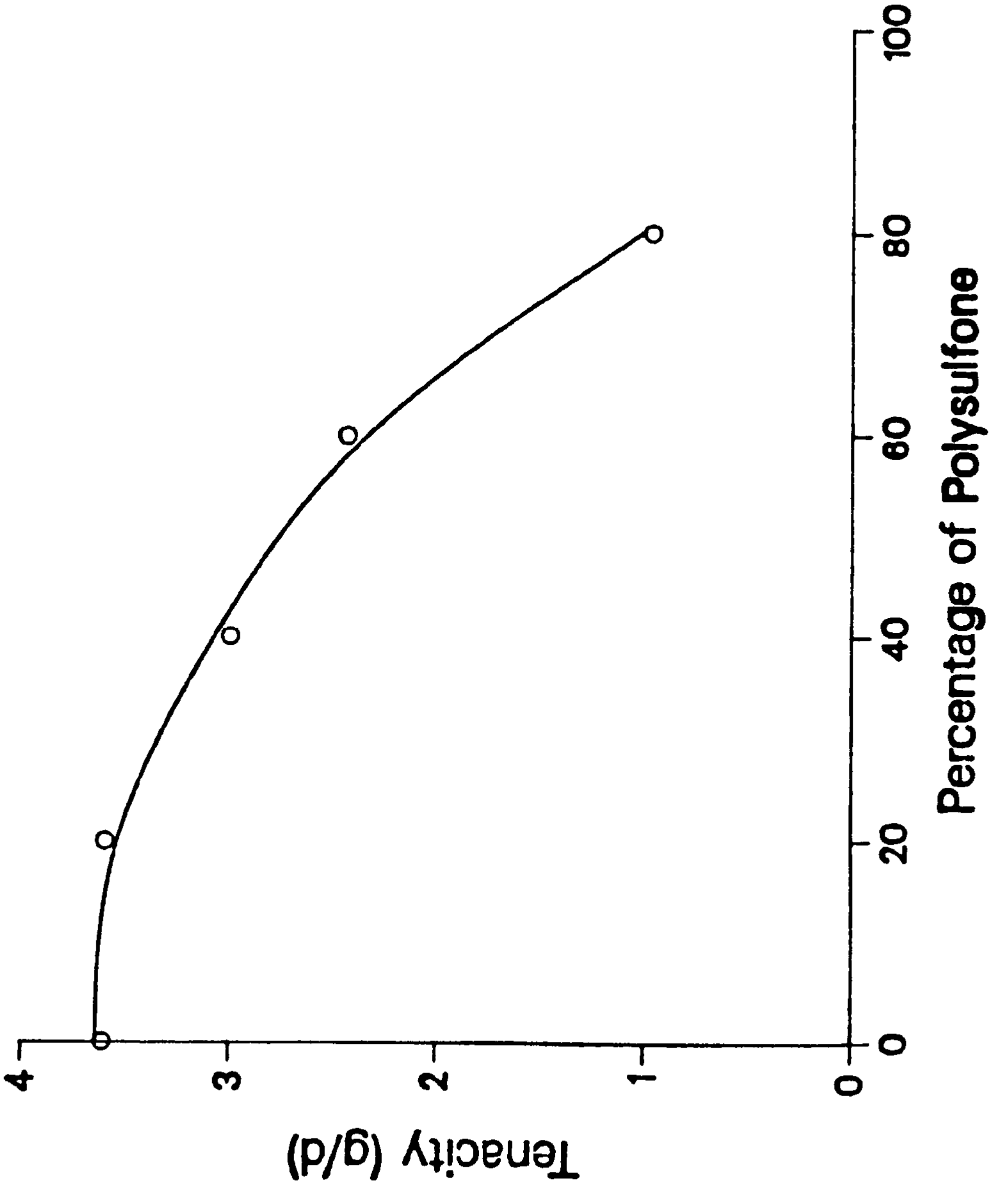

FIG. 3

Tensile modulus of dry-spun 80/20 PBI/Polysulfone with LiCl fibers as a function of draw ratio

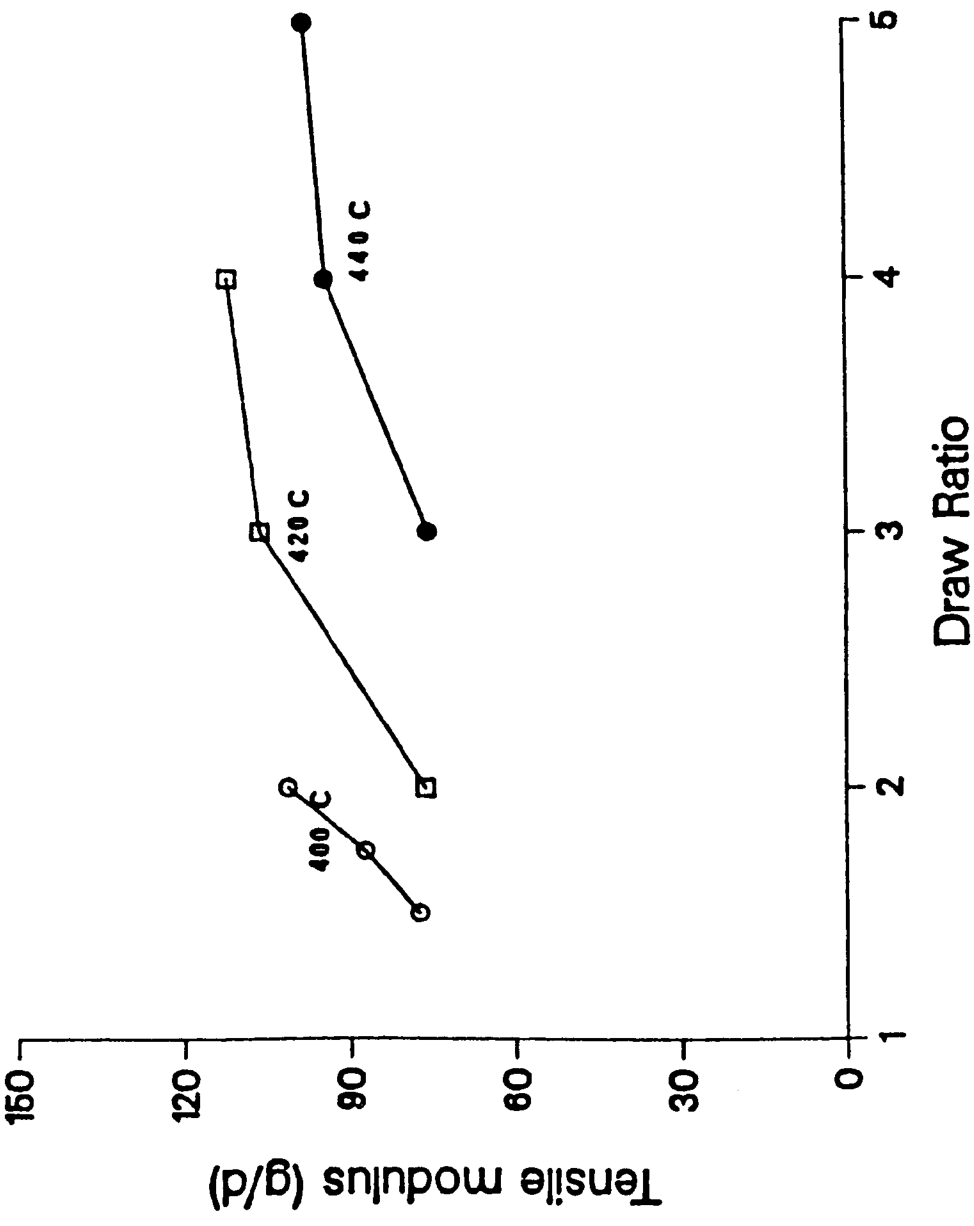

FIG. 4

Tensile strength of dry-spun 80/20 PBI/Polysulfone fibers with LiCl as a function of draw ratio

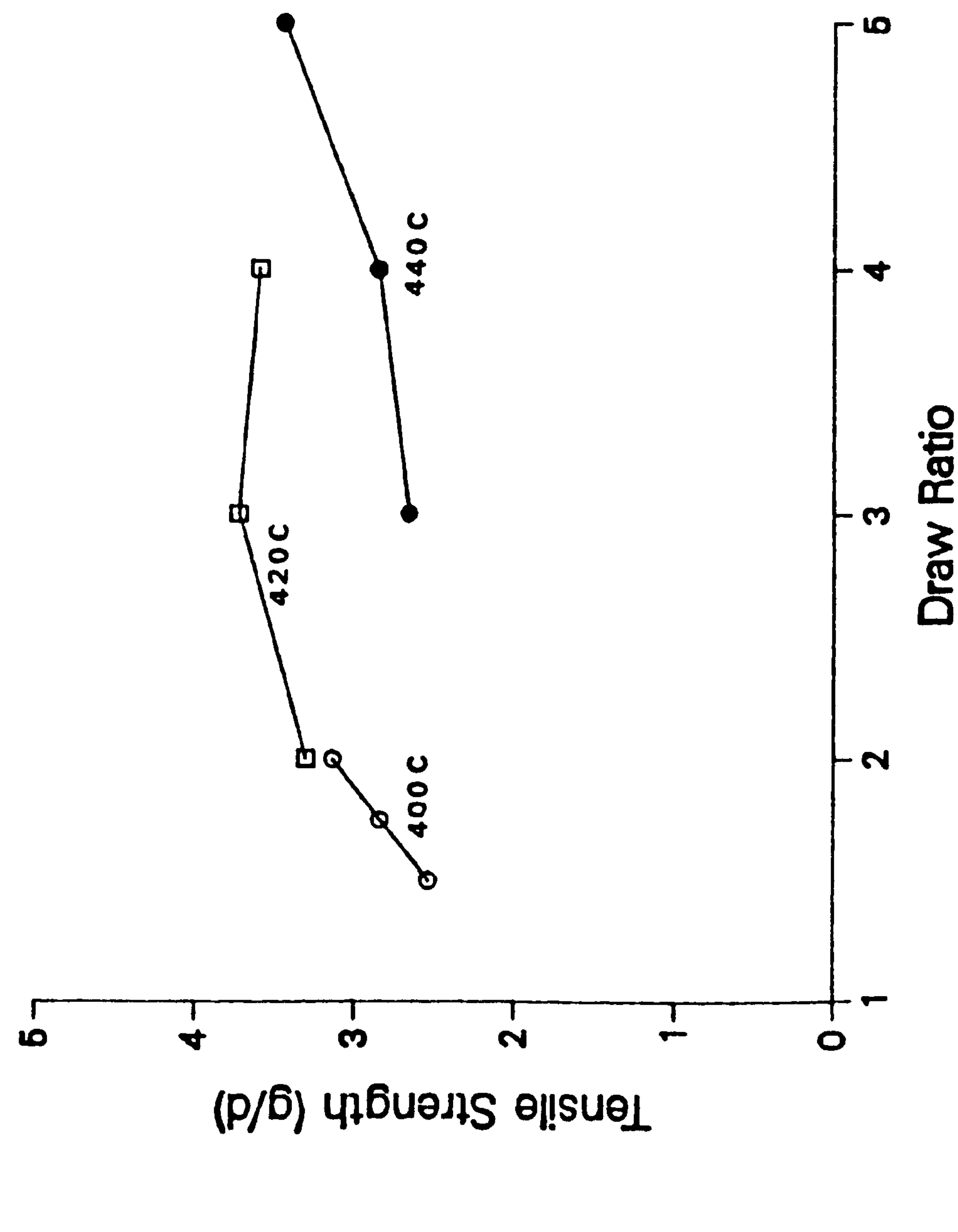

European Patent Office

# EUROPEAN SEARCH REPORT

Application Number

EP 91306082.8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP - A1 - 0 333 406 (MITSUI TOATSU CHEMICALS INC.) * Page 6, line 15 - page 8, line 20; examples 13-23, 48-58; claims 1-6,13-18 * -- | 1-29 | C 08 L 79/08<br>D 01 F 6/74 |
| A | EP - A2 - 0 240 302 (CELANESE CORP.) * Page 2, line 39 - page 4, line 62; page 7, lines 22-34; examples; claims * -- | 1-29 | |
| A | US - A - 4 810 730 (LETINSKI et al.) * Column 2, line 43 - column 4, line 53; column 5, line 37 - column 7, line 16; examples; claims * ---- | 1-29 | |
| | | | **TECHNICAL FIELDS SEARCHED (Int. Cl.5)** |
| | | | C 08 L 79/00<br>C 08 L 81/00<br>D 01 F |

The present search report has been drawn up for all claims

| Place of search | Date of completion of the search | Examiner |
|---|---|---|
| VIENNA | 25-09-1991 | TENGLER |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)